Europäisches Patentamt

European Patent Office

Office européen des brevets

(19)

(11) Veröffentlichungsnummer: **0 142 116**
**B1**

(12) # EUROPÄISCHE PATENTSCHRIFT

(45) Veröffentlichungstag der Patentschrifft:
07.02.90

(21) Anmeldenummer: **84113340.8**

(22) Anmeldetag: **06.11.84**

(51) Int. Cl. ⁵: **C 04 B 28/30, E 21 B 33/138**

(54) Mittel zum Abdichten von Bohrlochwandungen.

(30) Priorität: **12.11.83 DE 3341038**

(43) Veröffentlichungstag der Anmeldung:
**22.05.85 Patentblatt 85/21**

(45) Bekanntmachung des Hinweises auf die Patenterteilung:
**07.02.90 Patentblatt 90/06**

(84) Bennante Vertragsstaaten:
**AT GB IT NL**

(56) Entgegenhaltungen:
**DD-A-147 265**
**GB-A-2 071 181**
**US-A-1 991 338**
**US-A-2 649 160**
**US-A-3 713 489**

(73) Patentinhaber: **Chemische Fabrik Kalk GmbH**
**Kalker Hauptstrasse 22 Postfach 91 01 57**
**D-5000 Köln 91 (DE)**

(72) Erfinder: **Alsdorf, Hermann, Dr.**
**Gross Oderscheid 120**
**D-5063 Overath (DE)**
Erfinder: **Dittmar, Armin**
**Heideweg 5**
**D-2847 Barnstorf (DE)**

(74) Vertreter: **Werner, Hans-Karsten**
**Patentanwälte von Kreisler Selting Werner**
**Deichmannhaus am Hauptbahnhof**
**D-5000 Köln 1 (DE)**

LIBERGRAF, STOCKHOLM 1990

**Beschreibung**

Beim Bohren nach Erdöl oder Erdgas wird das Bohrklein mittels der Bohrspülung aus dem Bohrloch ausgetragen, von der Spülung abgetrennt und diese im Kreislauf wieder eingesetzt. Der hydraulische Druck der Bohrspülung in dem Bohrloch soll zum Offenhalten des Bohrloches und zur Verhinderung von Wasser-, Öl- oder Gaszuflüssen aus den durchbohrten Formationen etwas größer sein als der Lagerstättendruck. Weiter ist es günstig, wenn die Wechselwirkungen zwischen Bohrspülung und durchbohrten Formationen gering sind.

Wäßrige Bohrspülungen sind in der Regel Aufschlämmungen von Ton in Wasser, die als chemische Konditionierungsmittel Schutzkolloide und andere Chemikalien enthalten können. Sie haben den Vorteil, daß sie beim Durchbohren von porösem Gestein einen dünnen, aber dichten Filterkuchen bilden. Diese Wirkung reicht aber in stärker porösen oder klüftigen Formationen nicht mehr aus. Hier können vielmehr große Mengen Bohrspülung verloren gehen, die unter deren hydrostatischem Eigendruck in die Hohlräume und Klüfte der betreffenden Formation gepreßt werden. Um diese unerwünschten Verluste zu vermeiden, können den Bohrspülungen sogenannte Verstopfungsmittel, wie beispielsweise Glimmer, Cellophanschnitzel, Walnußschalen und dgl., zugesetzt werden, die die Verlustzone abdichten sollen. Die Anwendung dieser Dichtungsmittel ist aber mit den Nachteilen verbunden, daß sie nicht druckbeständig und nach Erfüllung ihrer Abdichtungsaufgabe nicht wieder zu beseitigen sind. Ihre Beseitigung wäre aber unbedingt erforderlich, um eine dauernde Schädigung des Trägers zu vermeiden.

Ein ideales Dichtungsmittel muß für die Zeitdauer des Verpumpens dafür noch dünnflüssig genug sein und erst nach dem Eindringen in die Hohlräume bzw. Klüfte der geologischen Formation sich so weit verfestigen, daß es in diesem Zustand dem hydrostatischen Druck der Bohrspülung standzuhalten vermag. Darüber hinaus soll das verfestigte Dichtungsmittel sich leicht wieder aus den Hohlräumen und Klüften der Formation entfernen lassen, wenn es sich bei der abgedichteten Formation um eine Lagerstätte eines abbauwürdigen Vorkommens handelt.

Ferner sollte das Dichtungsmittel zu einer Vorzementation der Bohrlochwandungen geeignet sein, d.h. eine Abdichtung der Formation im Trägerbereich vor der eigentlichen Zementation der Rohrfahrt bewirken. Damit kann das Eindringen des Zements in den Träger und die gegebenenfalls dadurch bedingte Schädigung des Trägers verhindert werden. Zur eigentlichen Zementierung von Bohrlochwandungen werden sogenannte Tiefbohrzemente eingesetzt, die durch eine große Menge Anmachwasser dünnflüssig und damit leicht pumpbar eingestellt sind. Das Abbinden solcher Zemente kann durch Zusatz von Calciumchlorid beschleunigt werden. Normalerweise wird jedoch das Abbinden solcher Zementbrühen verzögert, und zwar mittels Zusätzen, wie Stärke, Cellulose- oder Zuckerabfallprodukte, insbesondere Ligninsulfonat (vgl. hierzu "Ullmanns Enzyklopädie der Technischen Chemie", 3. Aufl., Bd.6 (1955), S. 577).

Ein zementartig abbindendes, aber säurelösliches Produkt ist der sogenannte Sorelzement, ein Gemisch aus Magnesiumoxid, Magnesiumchlorid und Wasser. Es ist bereits versucht worden, Sorelzement zur Zementierung von Bohrlochwandungen einzusetzen.

Hierbei ist festgestellt worden, daß in einigen Fällen das Bohrloch durch eine verfrühte Verfestigung des Sorelzements blockiert worden ist, Höhere Temperaturen im Bohrloch oder die Reaktionswärme des sich verfestigenden Sorelzements initiierten und beschleunigten diesen Vorgang.

Es stellte sich hieraus die Aufgabe, ein verpumpbares Mittel zu finden, das sich sowohl bei Raumtemperatur als auch erhöhter Temperatur erst nach einer Zeitdauer von 1,5 bis 4 Stunden zu einem säurelöslichen Feststoff verfestigt.

Zur Lösung der Aufgabe wurde ein Mittel zum Abdichten von Bohrlochwandungen gemäß Anspruch 1 gefunden, das aus gemahlenem Kalkgrieß mit einer oberen Korngröße von 0,75 und einem Kornanteil von < 0,1 mm zwischen 55 und 65 Gew.-%, Calcium- bzw. Magnesiumchlorid und Wasser besteht.

Vorzugsweise soll dieses Mittel aus einem innigen Gemisch von gemahlenem Kalkgrieß und einer annähernd konzentrierten wäßrigen Calcium- bzw. Magnesiumchloridlösung im Gewichtsverhältnis von etwa 4 : 5 bestehen.

Beim Brennen von grobstückigem Kalkstein zu Calciumoxid erreichen Teile des Brenngutes wegen der ungleichmäßigen Körnung des Kalksteins eine höhere Temperatur, als zur Abspaltung des Kohlendioxids notwendig ist. Dadurch sintert primär entstehendes, feinteiliges Calciumoxid zu größeren reaktionsträgeren Agglomeraten, dem sogenannten Hartbrand, zusammen. Dieser Sintervorgang wird durch die Beimengungen des Kalksteins, wie Silicium-, Aluminium- und Eisenoxide, gefördert.

Beim Trockenlöschen eines solchen Branntkalks wird dieser mit der zu seiner Hydratisierung gerade notwendigen Wassermenge bedüst. Dadurch zerfällt die größere und sehr reaktionsfähige Teilmenge des Branntkalks zu pulverförmigem Calciumhydroxid. Für die geringere Menge des Branntkalks, die aus dem reaktionsträgen Hartbrand besteht, ist die Löschzeit zu kurz, um dessen Hydratisierung zu erreichen. Dieser Hartbrand wird dann zusammen mit geringen Mengen ungebranntem Kalkstein von dem Calciumhydroxid als Kalkgrieß abgesiebt, der in einer Körnung von 0 bis etwa 20 mm mit folgender durchschnittlicher Zusammensetzung anfällt:

| | | |
|---|---|---|
| CaO | 34 | Gew.-% |
| Ca(OH)$_2$ | 40 | Gew.-% |
| CaCO$_3$ | 21 | Gew.-% |
| SiO$_2$ | 3,4 | Gew.-% |
| Al$_2$O$_3$ | 0,8 | Gew.-% |
| Fe$_2$O$_3$ | 0,8 | Gew.-% |

Nach Aufmahlen dieses Kalkgrießes zu einem Mahlprodukt, dessen obere Korngröße 0,75 mm beträgt und dessen Anteil an einer Korngröße von unter 0,1 mm zwischen 55 und 65 Gew.-% liegt, wird dieser Kalkgrieß als Bestandteil des erfindungsgemäßen Mittels eingesetzt werden.

Zur Herstellung des Mittels der Erfindung wird dieser Kalkgrieß vorteilhaft im Gewichtsverhältnis von etwa 4 : 5 mit einer annähernd konzentrierten, wäßrigen Lösung von Calcium- bzw. Magnesiumchlorid zu einem dünnflüssigen Gemisch vermischt. Es besteht jedoch auch die Möglichkeit, den aufgemahlenen Kalkgrieß zunächst mit feinteiligem Calcium- bzw. Magnesiumchlorid zu vermischen und diese Mischung dann durch Zumischen einer entsprechenden Menge Wasser in das dünnflüssige Gemisch überzuführen.

In beiden Fällen können dem Mittel der Erfindung noch andere Abfallstoffe mit hydraulischen Eigenschaften, wie beispielsweise Braunkohlenasche, zugemischt werden. Diese Abfallstoffe dürfen jedoch die Säurelöslichkeit des aus dem erfindungsgemäßen Mittel entstehenden festen Produkts nicht wesentlich beeinträchtigen. Die Menge, in der solche Abfallstoffe der erfindungsgemäßen Mittel inkorporiert werden, soll von 10 bis 30 Gew.-% des Feststoffanteils im Mittel der Erfindung nicht überschreiten.

Das Mittel der Erfindung ist für eine Zeitdauer von etwa 1 bis 3 Stunden nach seiner Herstellung ein dünnflüssiges und sehr gut pumpfähiges Gemisch, dessen Viskosität höchstens 5.000 m Pa.s beträgt. Erst etwa 1,5 bis 4 Stunden nach seiner Herstellung verfestigt sich dieses Gemisch zu einer festen Masse. Solange das erfindungsgemäße Mittel pumpfähig ist, kann es leicht bis zu der abzudichtenden Formation in dem Bohrloch verpumpt werden, dringt dort in die Hohlräume und Klüfte dieser Formation ein und bindet dort zu einer festen Masse ab, die die besagten Hohlräume und Klüfte vollständig dicht und mit genügender mechanischer Festigkeit ausfüllt, um ein Eindringen der Bohrspülung in diese Hohlräume und Klüfte zu verhindern. Gegenüber Mischungen aus Branntkalk, Calcium- bzw. Magnesiumchlorid und Wasser, die nach ihrer Herstellung innerhalb kurzer Zeit zu einem Festprodukt abbinden, hat das Mittel der Erfindung den Vorteil, daß es für eine zum Verpumpen völlig ausreichende Zeit nach seiner Herstellung zunächst dünnflüssig bleibt und dann erst abbindet. Das Abbinden des Mittels der Erfindung kann noch durch Zusätze von Substanzen, die das Abbinden verzögern oder beschleunigen, gesteuert werden.

Das erfindungsgemäße Mittel kann aus Abfall- bzw. Nebenprodukten der Ammoniaksoda-Fabrikation erzeugt werden, die auf diese Weise einer technisch nutzbringenden Verwendung zugeführt werden.

Die aus dem erfindungsgemäßen Mittel durch Abbinden entstehenden Festprodukte können durch Säuren, die, wie beispielsweise Salzsäure, mit den Komponenten des Mittels der Erfindung keine schwerlöslichen Verbindungen bilden, praktisch vollständig gelöst werden. Auf diese Weise können die mit Hilfe des erfindungsgemäßen Mittels abgedichteten Hohlräume und Klüfte durchbohrter Formationen wieder gängig gemacht werden, sofern dies erwünscht ist.

Bei Verwendung des erfindungsgemäßen Mittels zur Vorzementierung des Trägerbereichs eines Bohrlochs bildet das aus dem erfindungsgemäßen Mittel entstehende Festprodukt einen Untergrund, mit dem sich die später eingebrachte Zementmischung sicher und fest verbindet.

**Beispiel 1**

240 Gew.-Teile vermahlener Kalkgrieß mit folgender Korngrößenverteilung:

| | | |
|---|---|---|
| > | 0,5 mm | 3 Gew.-% |
| | 0,2 - 0,5 mm | 25 Gew.-% |
| | 0,1 - 0,2 mm | 17 Gew.-% |
| < | 0,1 mm | 55 Gew.-% |

werden mit 360 Gew.-Teilen einer 30 %-igen Calciumchloridlösung eine halbe Stunde lang zu einer dünnflüssigen Mischung verrührt, deren mit der Viskositätswaage bei einer Temperatur von 45°C bestimmte Viskosität 2000 mPa.s beträgt.

Bei anschließender Lagerung in einem geshlossenem Gefäß bei einer Temperatur von 60°C beginnt diese Mischung nach 70 min steifer zu werden und erreicht nach 5 Stunden eine nicht mehr verpumpbare Konsistenz. Wird diese bereits partiell abgebundene Mischung nach Verlauf von weiteren 24 Stunden auf eine Temperatur von 90°C erwärmt, so bindet sie im Verlauf von weiteren 3 Tagen zu einem harten Festkörper ab.

Die gleiche Mischung bindet nach einer Lagerzeit von 90 mm bei einer Temperatur von 60°C und einer anschliessenden Steigerung der Temperatur auf 90°C in etwa 20 Stunden zu einem harten Festkörper ab.

**Beispiel 2**

240 Gew.-Teile des in Beispiel 1 spezifizierten Kalkgrießes werden mit 360 Gew.-Teilen einer 40 %-igen Calciumchloridlösung eine halbe Stunde lang zu einer dünnflüssigen Mischung verrührt, deren mit der Viskositätswaage bei einer Temperatur von 45°C bestimmte Viskosität 2000 mPa.s beträgt.

Bei anschließender Lagerung in einem geschlossenen Gefäß bei einer Temperatur von 60°C beginnt diese Mischung nach 60 min steifer zu werden, erreicht nach weiteren 150 min eine nicht mehr verpumpbare Konsistenz und bindet nach weiteren 5 Stunden zu einem harten Festkörper ab.

Bei einer Temperatur von 90°C wird die gleiche Mischung nach 50 min steifer, erreicht nach weiteren 80 min nicht mehr verpumpbare Konsistenz und bindet nach weiteren 4 Stunden zu einem harten Festkörper ab.

Bei einer Temperatur von 90°C lösen sich diese Festkörper in 5 %-iger Salzsäure vollständig auf.

## Patentansprüche

1. Mittel zur Abdichtung von Bohrlochwandungen, das als Bestandteile Kalk in fester, feinkörniger Form sowie Calcium/Magnesium-Chlorid und Wasser aufweist, *dadurch gekennzeichnet,* daß der feinkörnige Kalk ein gemahlener, im wesentlichen CaO, $Ca(OH)_2$ und $CaCO_3$ sowie Beimengungen von SiO, $Al_2O_3$ und $Fe_2O_3$ enthaltender, beim Löschen von Branntkalk als Hartbrand anfallender Kalkgrieß mit einer oberen Korngröße von 0,75 mm und einem Kornanteil von < 0,1 mm zwischen 55 und 65 Gew.-% ist.

2. Mittel nach Anspruch 1, *dadurch gekennzeichnet,* daß es aus einem innigen Gemisch von gemahlenem Kalkgrieß und einer konzentrierten wäßrigen Calcium- bzw. Magnesiumchloridlösung im Gewichtsverhältnis von etwa 4 : 5 besteht.

3. Mittel nach Ansprüchen 1 bis 2, *dadurch gekennzeichnet,* daß dieses zusätzlich Abfallstoffe mit hydraulischen Eigenschaften in Mengen von 10 bis 30 Gew .-% des Feststoffanteils enthält, die die Säurelöslichkeit eines aus dem Mittel entstehenden Festprodukts nicht wesentlich beeinträchtigen.

## Claims

1. An agent for sealing borehole walls containing, as components, lime in a solid fine-grain form as well as calcium/magnesium chloride and water, characterized in that the fine-grain lime is a ground lime grit substantially containing CaO, $Ca(OH)_2$, and $CaCO_3$ and impurities of $SiO_2$, $Al_2O_3$ and $Fe_2O_3$ and having been obtained as hard-burned material upon hydrating caustic lime, said fine-grain lime having an upper grain size of 0.75 mm and a proportion of grains of < 0.1 mm of between 55 and 65 % by weight.

2. The agent according to claim 1, characterized in that it consists of an intimate mixture of ground lime grit and a concentrated aqueous calcium chloride and/or magnesium chloride solution, respectively, in a ratio by weight of about 4 : 5.

3. The agent according to claims 1 to 2, characterized in that it additionally contains waste materials having hydraulic properties in amounts of from 10 to 30 % by weight of the solids content, which waste materials do not substantially deteriorate the acid solubility of a solid product formed from the agent.

## Revendications

1. Produit pour l'étanchéification des parois des trous de forage, qui comprend comme constituants de la chaux sous forme solide en grains fins ainsi que du chlorure de calcium/magnésium et de l'eau, caractérisé en ce que la chaux en grains fins est une chaux granuleuse broyée, contenant essentiellement CaO, $Ca(OH)_2$ et $CaCO_3$ ainsi que, comme impuretés, $SiO_2$ $Al_2O_3$ et $Fe_2O_3$, qui apparaît sous forme d'agglomérats lors de l'extinction de la chaux vive, avec une taille maximale de grains de 0,75 mm et une fraction de grains < 0,1 mm comprise entre 55 et 65 % en poids.

2. Produit selon la revendication 1, caractérisé en ce qu'il consiste en un mélange intime de chaux granuleuse broyée et d'une solution aqueuse concentrée de chlorure de calcium ou de magnésium dans un rapport pondéral d'environ 4 : 5.

3. Produit selon les revendications 1 et 2, caractérisé en ce qu'il contient en outre, en des quantités de 10 à 30 % en poids de la fraction solide, des sous-produits à propriétés hydrauliques, qui ne nuisent pas sensiblement à la solubilité en milieu acide d'une matière solide provenant du produit.